# EUROPEAN PATENT APPLICATION

(11) **EP 3 432 296 A1**
(43) Date of publication of application: **23.01.2019**
(21) Application number: 18184155.2
(22) Date of filing: 18.07.2018
(51) Int. Cl.: G09F 3/20, G06Q 10/08, H04W 4/30

(54) **INFORMATION PROCESSING TERMINAL**

(30) Priority: 20.07.2017 JP 2017140716
(71) Applicant: Toshiba TEC Kabushiki Kaisha, Tokyo 141-8562 (JP)
(72) Inventor: Shiraishi, Norihisa, Tokyo, 141-8562 (JP)
(74) Representative: Hoffmann Eitle

(57) **Abstract**

An information processing terminal, such as a smart phone carried by a traveler, may communicate with a wireless bag claim tag having a display. The terminal includes a communication section configured to communicate with the wireless tag. The tag displays information related to the checked-in bag. A communication controller of the terminal can control the communication section. An authentication section can authenticate whether or not the article is associated with the terminal based on a first authentication information received by the terminal from the tag via the communication controller when the bag is checked in, and a second authentication information received by the terminal from the tag via the communication controller when the bag is to be claimed. A display controller can have the tag display a message indicating that the tag is associated with the terminal if authenticated.

## Description

### CROSS-REFERENCE TO RELATED APPLICATION

This application claims the benefit of and priority to Japanese Patent Application No. 2017-140716, filed in July 20, 2017, the entire contents of which are incorporated herein by reference.

### FIELD

Embodiments described herein relate generally to an information processing terminal.

### BACKGROUND

Often a traveler or user drops off his or her baggage or any personal article at an airport, a hotel, or the like, in the following manners. First, the user hands over the article to a person in charge. Next, the person in charge attaches a tag to the article for identification (e.g., paper tag, string tag with a numbered ticket attached, etc.), and hands over a corresponding claim tag (e.g., a piece of paper, a numbered ticket, etc.) paired with that tag (e.g., of the same identification number) to the traveler. For retrieving the article, the traveler shows (or hands over) the claim tag to the person in charge. Then, the person in charge visually confirms, for example, whether or not the tag and the claim tag have the same identification number. Upon determining a correct association, the person in charge returns the article to the traveler.

It has been studied to use a wireless tag=in which an RFID (Radio Frequency Identification) is combined with a display function of an electronic paper, for managing a depositing article.

However, if the wireless tag described above is used for depositing the article, the display function of the wireless tag is used only for identifying the article.

### SUMMARY OF THE INVENTION

One of the objects of the present invention is to improve prior art techniques and overcome at least some of the prior art problems as for instance above illustrated.

According to a first aspect of the present invention, it is provided an information processing terminal, which is configured to be carried by a person and communicate with a wireless tag having a display and configured to be attached to an article to be deposited and subsequently claimed by the person, the information processing terminal comprising:
a communication section configured to communicate with the wireless tag which displays information related to the article on the display of the wireless tag;
a communication controller configured to control the communication section, the communication controller being part of a processing section;
an authentication section of the processing section configured to authenticate whether or not the article is associated with the information processing terminal based on a first authentication information received by the information processing terminal from the wireless tag via the communication controller at the time the article is deposited, and a second authentication information received by the information processing terminal from the wireless tag via the communication controller at the time the article is claimed; and
a display controller of the processing section configured to send a message to the display of the wireless tag for indicating that the article is associated with the information processing terminal via the communication controller when the authentication section has authenticated that the information processing terminal and the wireless tag are associated with each other.

Optionally, in the information processing terminal according to the first aspect of the invention, the information processing terminal further includes a display section, and the display controller generates a message indicating that the information processing terminal and the wireless tag are associated with each other on the display section of the information processing terminal when the authentication section has authenticated that the information processing terminal and the wireless tag are associated with each other.

Optionally, in the information processing terminal according to the first aspect of the invention, the article is a baggage, and the wireless tag is a baggage tag, and the authentication section receives the first authentication information from the wireless tag via the communication controller when the information processing terminal is held close to the baggage tag when the baggage is deposited, and receives the second authentication information from the wireless tag via the communication controller when the information processing terminal is held close to the baggage tag when the baggage is claimed.

Optionally, in the information processing terminal according to the first aspect of the invention, the article is a baggage, and the wireless tag is a baggage tag, and the authentication section receives the first authentication information from the wireless tag via the communication controller when the information processing terminal is held close to the baggage tag when the baggage is deposited, and receives the second authentication information from the wireless tag via the communication controller when the information processing terminal is held close to the baggage tag when the baggage is claimed.

Optionally, in the information processing terminal according to the first aspect of the invention, the baggage tag displays a status information of baggage confirmation on the display, and the display controller changes the status information display of the baggage tag to a status information display indicating that the confirmation is completed via the communication controller at the time the baggage is received if it is authenticated by the authentication section that the baggage and the information processing terminal are associated with each other.

Optionally, in the information processing terminal according to the first aspect of the invention, the wireless tag includes a wireless communication unit configured to communicate with the communication section of the information processing terminal wirelessly and to enable the information processing terminal to communicate with the wireless tag when the information processing terminal is initially held proximate to the wireless tag.

Optionally, in the information processing terminal according to the first aspect of the invention, the wireless tag further includes an electronic paper in the display of the wireless tag.

Optionally, in the information processing terminal according to the first aspect of the invention, the wireless tag further includes a central processing unit and a memory operably connected with the wireless communication unit and the display for changing and displaying information in the electronic paper.

According to a second aspect of the present invention, it is provided a method for verifying a claimant to a deposited article, the method performed by an information processing terminal carried by the claimant together with a wireless tag having a display for showing status information and confirmation, the method including:
providing, at the time when the article is deposited, the wireless tag to the article and providing the information processing terminal close to the wireless tag to receive a first authentication information from the wireless tag;
providing, at the time when the article is claimed, the information processing terminal close to the wireless tag to receive a second authentication information from the wireless tag;
authenticating that the information processing terminal and the wireless tag are associated with each other based on the first authentication information and the second authentication information; and
upon successful authentication, updating the status information of article confirmation on the display of the wireless tag to a status information indicating that confirmation is completed at the time when the article is claimed.

Optionally, the method according to the second aspect of the invention providing the information processing terminal close to the wireless tag further comprises sending a signal from a communication section in the information processing terminal to a wireless communication unit in the wireless tag, and receiving a return signal from the wireless communication unit at the communication section.

Optionally, the method according to the second aspect of the invention providing the information processing terminal close to the wireless tag comprises establishing a proximate distance for enabling the wireless communication unit to receive the signal from the communication section.

Optionally, in the method according to the second aspect of the invention the return signal includes information transmitted from a reception device providing the wireless tag.

According to a third aspect of the present invention, it is provided a system for verifying a bag claimant's identity, the system comprising a reception device and a wireless tag, the reception device in wireless communication with the wireless tag, wherein the wireless tag includes a wireless communication unit operable to receive a first information from the reception device and a display for showing a second information related to the first information, the wireless communication unit further operable to communicate with a portable terminal for relaying the first information to the portable terminal.

Optionally, in the system according to the third aspect of the invention the display of the wireless tag is an electronic paper.

Optionally, in the system according to the third aspect of the invention the portable terminal communicates with the wireless tag at a first time when the wireless tag sends, and the portable terminal receives and records the first information; and at a second time when the wireless tag sends, and the portable terminal authenticates the first information by comparing the first information received from the wireless tag at the second time to the recorded first information received in the first time.

Optionally, in the system according to the third aspect of the invention the wireless tag receives an authentication confirmation from the portable terminal and shows a message indicating the authentication in the display of the wireless tag and verifying the bag claimant.

Optionally, in the system according to the third aspect of the invention the wireless tag, in the absence of receiving any authentication confirmation, shows a message indicating the wireless tag yet claimed.

### DESCRIPTION OF THE DRAWINGS

Fig. 1 is a diagram illustrating an overall constitution of respective devices used at a departure section of an airport according to an embodiment;
Fig. 2 is a flowchart depicting the sequence of processing by respective devices shown in Fig. 1;
Fig. 3 is an external view illustrating a wireless tag according to the embodiment;
Fig. 4 is a diagram illustrating a display example by the wireless tag;
Fig. 5 is a diagram illustrating a display example by the wireless tag;
Fig. 6 is a diagram illustrating a display example by a portable terminal according to the embodiment;
Fig. 7 is a diagram illustrating an overall constitution of respective devices used at an arrival section of the airport according to the embodiment;
Fig. 8 is a flowchart depicting the sequence of processing by respective devices shown in Fig. 7; and
Fig. 9 is a diagram illustrating a display example by the wireless tag according to the embodiment.

### DETAILED DESCRIPTION

In accordance with an embodiment, an information processing terminal, such as a smartphone, for example, carried by a person, which can communicate with a wireless tag that includes a display. The information processing terminal includes a communication section configured to communicate with the wireless tag, which is attached to an article when the person deposits the article. The display can display information related to the article. The information processing terminal further includes a communication controller configured to control the communication section.

An authentication section is configured to authenticate whether or not the wireless tag on the article is associated with the information processing terminal based on a first authentication information received by the information processing terminal from the wireless tag via the communication controller when the article is deposited, and a second authentication information received by the information processing terminal from the wireless tag via the communication controller when the article is received. The wireless tag includes a display controller configured to display a message indicating that the article is associated with the information processing terminal on the display of the wireless tag if it is authenticated by the authentication section.

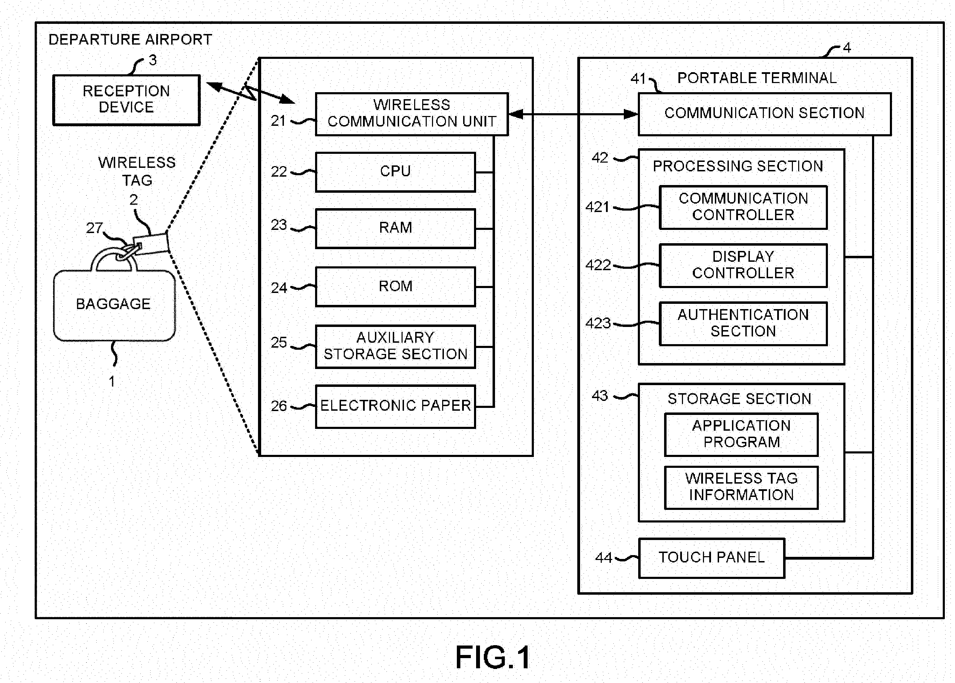

Hereinafter, an information processing terminal, according to the present embodiment, is described with reference to the accompanying drawings. In the following embodiment, a case is described in which a user (who is a person carrying an information processing terminal and/or a claimant of a deposited article like a baggage) deposits a baggage after check-in at an airport from which the user departs (hereinafter referred to as a departure airport), and receives the baggage at an airport at which the user arrives (hereinafter referred to as an arrival airport) . First, with reference to Fig. 1, the devices used in the departure airport according to the present embodiment is described. Fig. 1 is a diagram illustrating general devices used at the departure airport according to the embodiment.

In Fig. 1, a baggage 1 is to be checked in by its owner at an airport, for example. The user hands over the baggage 1 to a person in charge at a reception counter (place for depositing the baggage 1) of the departure airport to deposit it.

A wireless tag 2 (baggage tag) used for identifying the article is attached to the baggage 1. The wireless tag 2 includes a wireless communication unit 21, a CPU (Central Processing Unit) 22, a RAM (Random Access Memory) 23, a ROM (Read Only Memory) 24, an auxiliary storage section 25, which constitute an RFID, an electronic paper 26, and a belt 27. Each component of the RFID and the electronic paper 26 are connected to each other via a bus.

The wireless communication unit 21 is used for wirelessly communicating (for example, communicating by NFC (Near Field Communication), Bluetooth®, etc.) with a reception device 3 and a portable terminal 4, and includes a coil-shaped antenna, wiring, an electronic circuit, and the like. The CPU 22 executes a computing processing.

The RAM 23 is a temporary storage module and functions as a work area of the CPU 22. The ROM 24 is a storage module, and data including various programs is fixedly stored in advance. The ROM 24 stores unique identification information (first authentication information (not shown)) for each wireless tag 2. The auxiliary storage section 25 stores various data received from the reception device 3 and the portable terminal 4.

The electronic paper 26 (display section) continuously displays information relating to the baggage 1 in a state in which no power is supplied (including a case in which a little power is supplied, the same is applied in the following description). The CPU 22 generates, modifies, and erases display contents of the electronic paper 26 by using electricity generated when the wireless communication unit 21 receives electromagnetic waves from the reception device 3 and the portable terminal 4, and then, the electronic paper 26 continuously displays the display contents even in the state of no power supply. The belt 27 is used for attaching the wireless tag 2 to a handle or the like of the baggage 1.

A communication distance by the wireless tag 2 may vary depending on a frequency band to be used and use environment. For example, the communication distance is several centimeters to several tens of meters, but it may be selected as appropriate according to the purpose of use.

The wireless tag 2 transmits and receives signals to and from other wireless devices, performs predetermined processing based on the received signals, converts the processing results and requests for other wireless devices into signals, and transmits the results. And transmission and reception of information via radio is performed by converting information into a signal.

The reception device 3 may be installed at the service counter of the departure airport for baggage check-in. The reception device 3 includes a computer, a reader/writer for communicating with the wireless tag 2, and the like.

The information processing terminal or portable terminal 4 may be, for example, a smartphone, a mobile computer, or a tablet. The portable terminal 4 includes a communication section 41, a processing section 42, a storage section 43, and a touch panel 44, which are connected to each other via a bus line. The communication section 41 is used for communicating with the wireless tag 2 as a communication interface.

The processing section 42, which is composed of, for example, a CPU and a memory, includes a communication controller 421, a display controller 422, and an authentication section 423 as a functional section. The communication controller 421 controls the communication section 41.

The display controller 422 instructs the touch panel 44 to perform display based on various data or instructs the wireless tag 2 to perform display on the electronic paper 26.

The authentication section 423 authenticates whether or not the baggage 1 and the portable terminal 4 are associated or tied with each other in advance based on a first authentication information and a second authentication information. The first authentication information is received from the wireless tag 2 via the communication controller 421 if the portable terminal 4 is held close to the wireless tag 2 when the baggage 1 is deposited at the departure airport, and the second authentication information is received from the wireless tag 2 via the communication controller 421 if the portable terminal 4 is brought close to the wireless tag 2 when the baggage 1 is received at the arrival airport. The first authentication information and the second authentication information are, for example, respectively unique to each wireless tag 2 described above.

If it is authenticated by the authentication section 423 that the baggage 1 is associated with the portable terminal 4, the display controller 422 enables the electronic paper 26 of the wireless tag 2 to display a message indicating that they are associated with via the communication controller 421. For example, the display controller 422 changes a status display for the baggage confirmation at the time of receiving the baggage 1 to a confirmed status. Further, the display controller 422 changes the status display for the baggage confirmation at the time of receiving the baggage 1 to the confirmed status on the touch panel 44 if it is authenticated by the authentication section 423 that a relationship between the baggage 1 and the portable terminal 4 is correct.

The storage section 43 is, for example, a ROM, an SDD (Solid State Drive) or the like, to store an OS (Operating System), dedicated application programs used to deposit the baggage 1, wireless tag information (passenger information and status information described later). The processing section 42 realizes the functional sections 421 to 423 by executing the dedicated application programs installed in advance in the storage section 43.

The touch panel 44 includes a display device and a touch sensor. The display device displays an arbitrary screen such as a GUI (Graphical User Interface) screen. As the display device, for example, a well-known device such as a color LCD (Liquid Crystal Display) is included. The touch sensor is superposed on a display surface of the display device. The touch sensor detects a touch position by the user on the display surface of the display device and sends the position information to the processing section 42. As the touch sensor, a well-known device is provided.

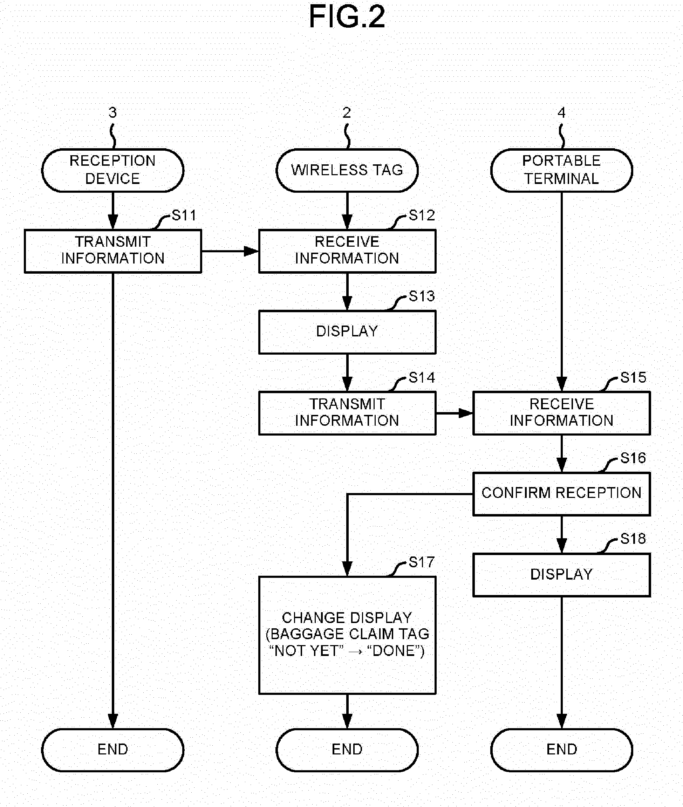

Next, with reference to Fig. 2, processing by respective devices used in the departure airport according to the embodiment is described. Fig. 2 is a flowchart depicting the sequence of processing by respective devices used in the departure airport.

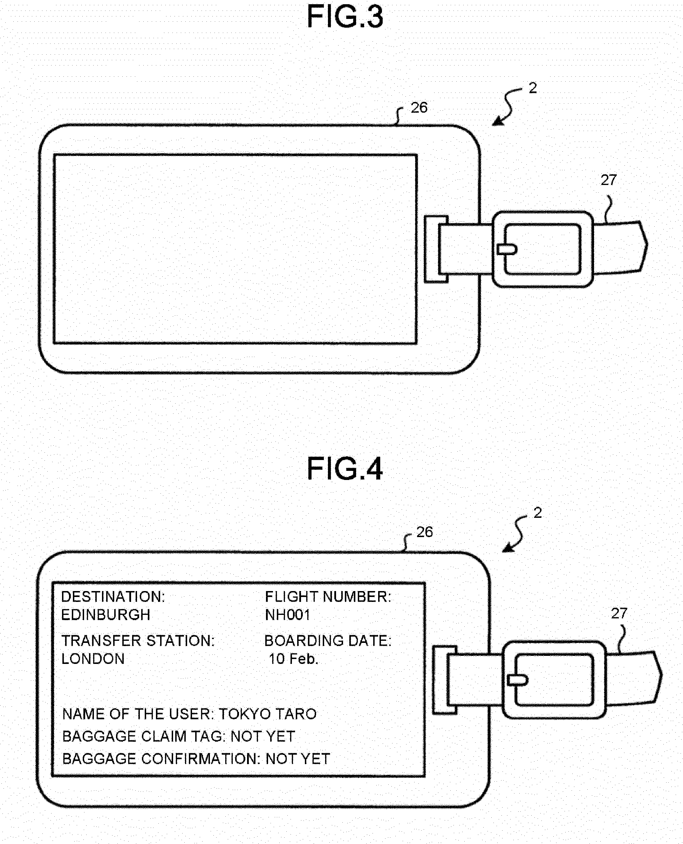

First, the user hands over a boarding pass (not shown in Fig. 1) and the baggage 1 to a person in charge at the reception counter of the departure airport. Next, the person in charge attaches the wireless tag 2 to the baggage 1 with the belt 27. The appearance of the wireless tag 2 is shown in Fig. 3. As shown in Fig. 3, nothing is displayed on the electronic paper 26 of the wireless tag 2 at the time of being attached to the baggage 1.

Returning to Fig. 2, the person in charge next transmits a destination (arrival airport), a flight number of an aircraft, a transfer station (transfer airport), a boarding date, passenger information such as name of the user, status information of a baggage claim tag and status information of baggage confirmation from the reception device 3 to the wireless tag 2 (Act S11).

In the wireless tag 2, after receiving the information in Act S12, the CPU 22 transmits the passenger information and the status information to the electronic paper 26 by using the electricity generated when the wireless communication unit 21 receives the electromagnetic waves from the reception device 3 (Act S13) . A display example on the paper screen (electronic paper) of the wireless tag 2 is shown in Fig. 4. As shown in Fig. 4, a destination (Edinburgh), a flight number (NH001), a transfer station (London), a boarding date (10 Feb.), the name of the user (Tokyo Taro), the status information of the baggage claim tag (yet), and the status information of the baggage confirmation (yet) are displayed on the electronic paper 26 of the wireless tag 2. Thereafter, the electronic paper 26 continuously displays the display contents even if no power is supplied.

Returning to Fig. 2, next, if the user holds his or her portable terminal 4 close to the wireless tag 2, the CPU 22 of the wireless tag 2 transmits the passenger information and the status information of the baggage confirmation (yet) to the portable terminal 4 via the wireless communication unit 21 (Act S14) .

The communication controller 421 of the portable terminal 4 receives the passenger information and the status information of the baggage confirmation (yet) transmitted from the wireless tag 2 in Act S14 (Act S15).

After the processing in Act S15, the communication controller 421 of the portable terminal 4 transmits reception confirmation information to the wireless tag 2 (Act S16).

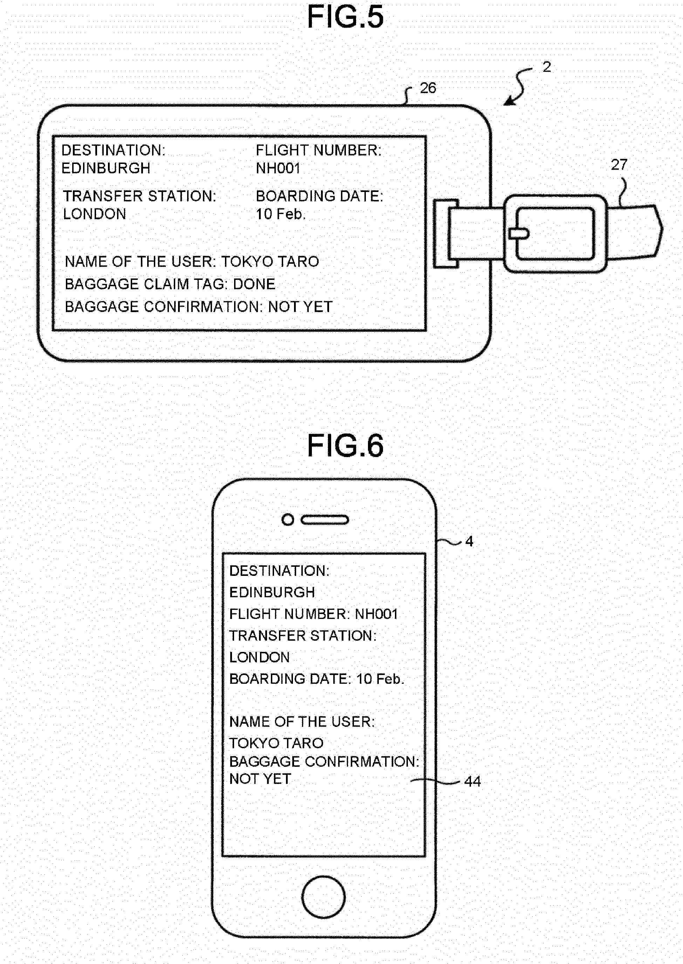

If the reception confirmation information transmitted from the portable terminal 4 in Act S16 is received, the CPU 22 of the wireless tag 2 changes the display of the status information of the baggage claim tag on the electronic paper 26 from "yet" to "done" (Act S17). A display example on the paper screen of the wireless tag 2 is shown in Fig. 5. As shown in Fig. 5, the display of the status information of the baggage claim tag on the electronic paper 26 of the wireless tag 2 is changed from "yet" to "done."

Returning to Fig. 2 again, after the processing in Act S16, the display controller 422 of the portable terminal 4 displays the information on the touch panel 44 (Act S18). A display example on the paper screen of the portable terminal 4 is shown in Fig. 6. As shown in Fig. 6, the touch panel 44 of the portable terminal 4 displays the destination (Edinburgh), the flight number (NH 001), the transfer station (London), the boarding date (10 Feb.), the name of the user (Tokyo Taro), the status information of the baggage confirmation (yet).

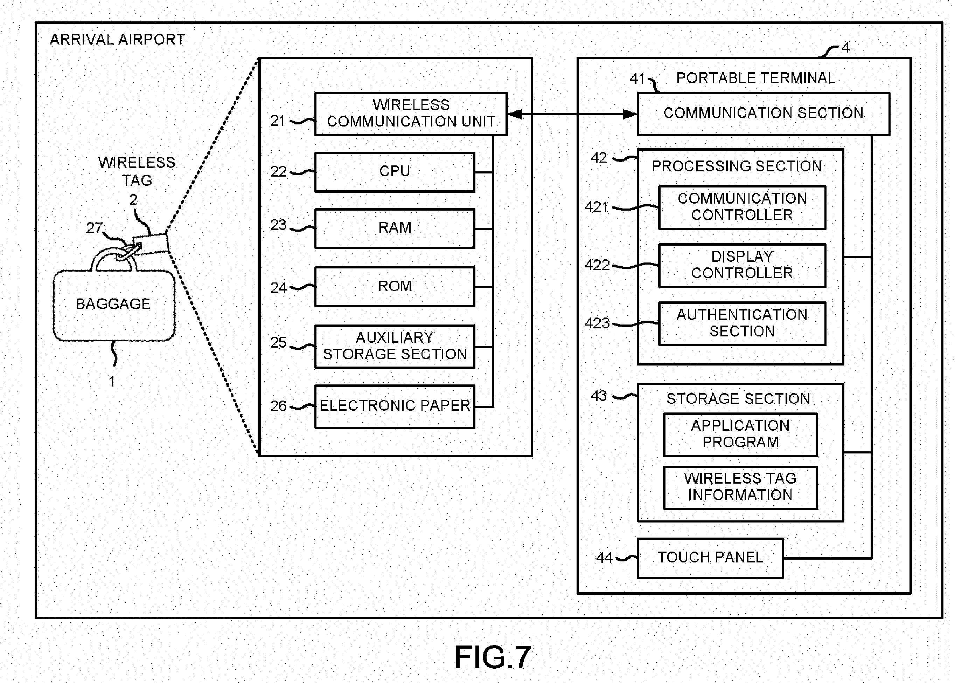

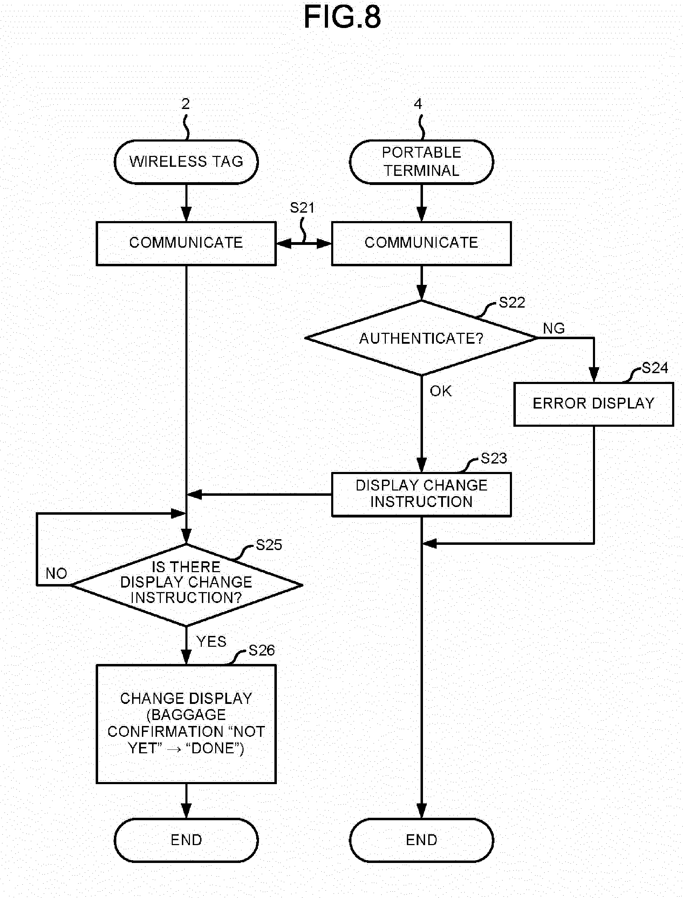

Next, with reference to Fig. 7 and Fig. 8, processing by respective devices used at the arrival airport according to the embodiment is described. Fig. 7 is a diagram illustrating an overall constitution of respective devices used at the arrival airport. Respective devices in Fig. 7 are the same as those shown in Fig. 1 except the reception device 3 and therefore the description thereof is omitted. Fig. 8 is a flowchart depicting sequence of processing by respective devices used in the arrival airport.

At the arrival airport, if the user receives the baggage 1 to which the wireless tag 2 is attached from the person in charge, the user holds his or her portable terminal 4 close to the wireless tag 2. Then, the portable terminal 4 communicates with the wireless tag 2 (Act S21). Specifically, the communication controller 421 of the portable terminal 4 receives identification information (second authentication information) from the wireless tag 2 through the communication section 41.

The authentication section 423 of the portable terminal 4 authenticates whether or not the baggage 1 and the portable terminal 4 are associated with each other in advance based on the first authentication information received from the wireless tag 2 at the departure airport and the second authentication information received from the wireless tag 2 at the arrival airport (Act S22), and if they are associated with each other, the authentication section 423 executes a processing in Act S23, contrarily, if they are not associated with, the authentication section 423 executes a processing in Act S24.

In Act S24, the display controller 422 of the portable terminal 4 displays an error message on the touch panel 44.

In Act S23, the display controller 422 of the portable terminal 4 instructs the wireless tag 2 via the communication controller 421 to change the status display of the baggage confirmation on the electronic paper 26 from "yet" to "done." At this time, the display controller 422 changes the display (Fig. 6) of the status information of the baggage confirmation on the touch panel 44 from "yet" to "done."

After the processing in Act S21, the CPU 22 of the wireless tag 2 determines whether or not a display change instruction is issued from the portable terminal 4 (Act S25). If it is determined that the instruction is issued, the CPU 22 takes Yes and then executes a processing in Act S26. If it is determined that the instruction is not issued, the CPU 22 takes No and then re-executes the processing in Act S25.

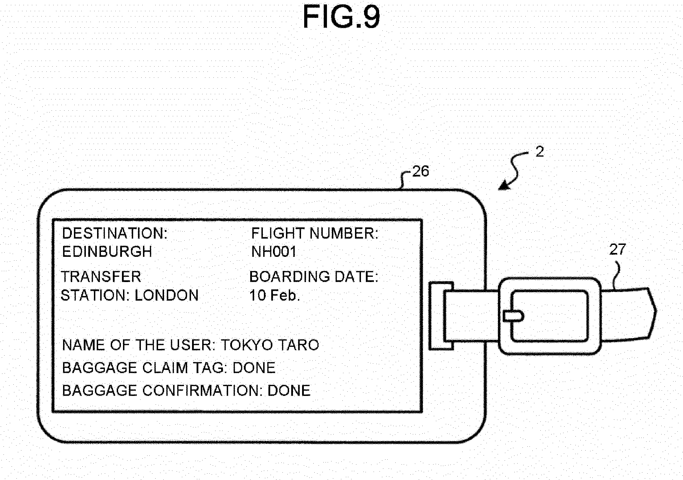

In Act S26, the CPU 22 of the wireless tag 2 changes the display of the status information of the baggage confirmation on the electronic paper 26 from "yet" to "done." A display example on the paper screen of the wireless tag 2 is shown in Fig. 9. As shown in Fig. 9, the status information of the baggage confirmation on the electronic paper 26 of the wireless tag 2 is changed from "yet" to "done."

As described above, according to the present embodiment, if the wireless tag 2 with a display function is used to deposit the baggage 1 (article), it can provide the portable terminal 4 capable of realizing functions other than a function of identifying an article. Specifically, when the user deposits the baggage 1 at the departure airport, the electronic paper 26 of the wireless tag 2 displays not only the passenger information but also the status information of the baggage claim tag and the display of the status information of the baggage claim tag is changed from "yet" to "done" at the time the wireless tag 2 transmits the passenger information and the status information to the portable terminal 4. In this manner, the portable terminal 4 functions as a baggage claim tag and can display the status of the baggage claim tag in which the claim tag is issued. Therefore, the person in charge and the user can easily confirm that the depositing processing is completed. In other words, they recognize the status of the baggage claim tag (whether or not the baggage claim tag is issued or the baggage is deposited).

At the arrival airport, if the user holds the portable terminal 4 close to the wireless tag 2 attached to the baggage 1, the authentication section 423 of the portable terminal 4 authenticates whether or not the baggage 1 and the portable terminal 4 are associated with each other in advance, and if they are associated with, the display of the status information of the baggage confirmation on the electronic paper 26 of the wireless tag 2 is changed from "yet" to "done." The person in charge and the user can confirm that the processing is successfully completed. The person in charge can easily confirm that the baggage 1 is safely received by the correct user. Therefore, it can provide a high security in delivering a baggage at the arrival airport. On the other hand, the user can easily confirm that the baggage 1 is his/her own, and therefore, it can enhance convenience and serviceability for a customer.

If the baggage 1 and the portable terminal 4 are associated with in the authentication processing, the display of the status information of the baggage confirmation on the touch panel 44 of the portable terminal 4 is also changed from "yet" to "done. " The user can easily recognize completion of the authentication processing. In other words, the user can confirm the display of the status information of the baggage confirmation on the touch panel 44 of the portable terminal 4, and therefore, it can easily avoid the possibility of incorrect receiving of the baggage of another person even if the baggage is the same as that of another person.

The wireless tag 2 can be collected after use and is reusable after data is deleted. Thus, it can achieve a high economic efficiency in deposition/delivery service of baggage at an airport.

The application program executed by the portable terminal 4 of the present embodiment can be recorded as a file in installable format or executable format in a computer-readable recording medium such as a CD-ROM, a flexible disk (FD), a CD-R, a DVD (Digital Versatile Disk) or the like to be provided. The application program may be provided by being stored on a computer connected to a network such as the Internet or being downloaded via the network.

For example, at the arrival airport, a wireless communication device may be arranged at an exit gate to check the status information of the baggage confirmation in the wireless tag 2. The wireless communication device determines that it is confirmed if the status information of the baggage confirmation is "done." On the other hand, if the status information of the baggage confirmation is "yet", the wireless communication device determines that it is not confirmed and then issues a warning sound or performs a warning display.

In the above-described embodiment, unique identification information is used for each wireless tag 2 at the time of authentication, but it is not limited to this. A passenger ticket number, a passport number, or the like may be used.

In the above-described embodiment, a case in which a baggage is deposited/delivered at an airport is described, but it is not limited to this case. For example, it may be applied to depositing a baggage at a hotel baggage room or the like.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. An information processing terminal, which is configured to be carried by a person and communicate with a wireless tag having a display and configured to be attached to an article to be deposited and subsequently claimed by the person, the information processing terminal comprising:
a communication section configured to communicate with the wireless tag which displays information related to the article on the display of the wireless tag;
a communication controller configured to control the communication section, the communication controller being part of a processing section;
an authentication section of the processing section configured to authenticate whether or not the article is associated with the information processing terminal based on a first authentication information received by the information processing terminal from the wireless tag via the communication controller at the time the article is deposited, and a second authentication information received by the information processing terminal from the wireless tag via the communication controller at the time the article is claimed; and
a display controller of the processing section configured to send a message to the display of the wireless tag for indicating that the article is associated with the information processing terminal via the communication controller when the authentication section has authenticated that the information processing terminal and the wireless tag are associated with each other.

2. The information processing terminal according to claim 1, wherein
the information processing terminal further includes a display section, and
the display controller generates a message indicating that the information processing terminal and the wireless tag are associated with each other on the display section of the information processing terminal when the authentication section has authenticated that the information processing terminal and the wireless tag are associated with each other.

3. The information processing terminal according to claim 1 or 2, wherein
the article is a baggage, and the wireless tag is a baggage tag, and
the authentication section receives the first authentication information from the wireless tag via the communication controller when the information processing terminal is held close to the baggage tag when the baggage is deposited, and receives the second authentication information from the wireless tag via the communication controller when the information processing terminal is held close to the baggage tag when the baggage is claimed.

4. The information processing terminal according to claim 3, wherein
the baggage tag displays a status information of baggage confirmation on the display, and the display controller changes the status information display of the baggage tag to a status information display indicating that the confirmation is completed via the communication controller at the time the baggage is received if it is authenticated by the authentication section that the baggage and the information processing terminal are associated with each other.

5. The information processing terminal according to any of claims 1 to 4, wherein the wireless tag includes a wireless communication unit configured to communicate with the communication section of the information processing terminal wirelessly and to enable the information processing terminal to communicate with the wireless tag when the information processing terminal is initially held proximate to the wireless tag.

6. The information processing terminal according to any of claims 1 to 5, wherein the wireless tag further includes an electronic paper in the display of the wireless tag, and wherein preferably the wireless tag further includes a central processing unit and a memory operably connected with the wireless communication unit and the display for changing and displaying information in the electronic paper.

7. A method for verifying a claimant to a deposited article, the method performed by an information processing terminal carried by the claimant together with a wireless tag having a display for showing status information and confirmation, the method including:
providing, at the time when the article is deposited, the wireless tag to the article and providing the information processing terminal close to the wireless tag to receive a first authentication information from the wireless tag;
providing, at the time when the article is claimed, the information processing terminal close to the wireless tag to receive a second authentication information from the wireless tag;
authenticating that the information processing terminal and the wireless tag are associated with each other based on the first authentication information and the second authentication information; and
upon successful authentication, updating the status information of article confirmation on the display of the wireless tag to a status information indicating that confirmation is completed at the time when the article is claimed.

8. The method of claim 7, wherein providing the information processing terminal close to the wireless tag further comprises sending a signal from a communication section in the information processing terminal to a wireless communication unit in the wireless tag, and receiving a return signal from the wireless communication unit at the communication section.

9. The method of claim 9 or 10, wherein providing the information processing terminal close to the wireless tag comprises establishing a proximate distance for enabling the wireless communication unit to receive the signal from the communication section.

10. The method of claim 8, wherein the return signal includes information transmitted from a reception device providing the wireless tag.

11. A system for verifying a bag claimant's identity, the system comprising a reception device and a wireless tag, the reception device in wireless communication with the wireless tag, wherein the wireless tag includes a wireless communication unit operable to receive a first information from the reception device and a display for showing a second information related to the first information, the wireless communication unit further operable to communicate with a portable terminal for relaying the first information to the portable terminal.

12. The system of claim 11, wherein the display of the wireless tag is an electronic paper.

13. The system of claim 11 or 12, wherein the portable terminal communicates with the wireless tag at a first time when the wireless tag sends, and the portable terminal receives and records the first information; and at a second time when the wireless tag sends, and the portable terminal authenticates the first information by comparing the first information received from the wireless tag at the second time to the recorded first information received in the first time.

14. The system of claim 13, wherein the wireless tag receives an authentication confirmation from the portable terminal and shows a message indicating the authentication in the display of the wireless tag and verifying the bag claimant.

15. The system of claim 13 or 14, wherein the wireless tag, in the absence of receiving any authentication confirmation, shows a message indicating the wireless tag yet claimed.
